## Europäisches Patentamt

## European Patent Office

## Office européen des brevets

(19)

(11) **EP 1 131 854 B1**

(12) **FASCICULE DE BREVET EUROPEEN**

(45) Date de publication et mention
de la délivrance du brevet:
**12.02.2003 Bulletin 2003/07**

(21) Numéro de dépôt: **99972375.2**

(22) Date de dépôt: **10.11.1999**

(51) Int Cl.⁷: **H01M 8/02**, H01M 8/04

(86) Numéro de dépôt international:
**PCT/FR99/02765**

(87) Numéro de publication internationale:
**WO 00/030199 (25.05.2000 Gazette 2000/21)**

(54) **PLAQUES BIPOLAIRES POUR PILE A COMBUSTIBLE ET PILE A COMBUSTIBLE COMPRENANT CES PLAQUES**

BIPOLARE PLATTEN FÜR BRENNSTOFFZELLEN UND DIESE PLATTEN ENTHALTENDE
BRENNSTOFFZELLE

BIPOLAR PLATES FOR FUEL CELL AND FUEL CELL COMPRISING SAME

(84) Etats contractants désignés:
**AT BE CH CY DE DK ES FI FR GB GR IE IT LI LU MC NL PT SE**

(30) Priorité: **12.11.1998 FR 9814199**

(43) Date de publication de la demande:
**12.09.2001 Bulletin 2001/37**

(73) Titulaires:
• **COMMISSARIAT A L'ENERGIE ATOMIQUE**
**75752 Paris Cédex 15 (FR)**
• **AUTOMOBILES PEUGEOT**
**75016 Paris (FR)**
• **AUTOMOBILES CITROEN**
**92200 Neuilly-sur-Seine (FR)**
• **Renault s.a.s.**
**92100 Boulogne Billancourt (FR)**

(72) Inventeurs:
• **MARCHAND, Marielle**
**F-42920 Jeansagnière (FR)**
• **LEBAIGUE, Olivier**
**F-38140 Apprieu (FR)**
• **AMBLARD, Michel**
**F-38950 Saint-Martin-Le-Vinoux (FR)**
• **BADOR, Bruno**
**F-38330 Biviers (FR)**
• **HEURTAUX, Fabien**
**F-78500 Sartrouville (FR)**
• **LISSE, Jean-Pierre**
**F-78180 Montigny Le Bretonneux (FR)**

(74) Mandataire: **Poulin, Gérard et al**
**BREVALEX**
**3, rue du Docteur Lancereaux**
**75008 Paris (FR)**

(56) Documents cités:
**WO-A-98/52242**          **US-A- 3 134 696**
**US-A- 4 175 165**

• **PATENT ABSTRACTS OF JAPAN vol. 018, no. 003 (E-1485), 6 janvier 1994 (1994-01-06) -& JP 05 251097 A (FUJI ELECTRIC CO LTD), 28 septembre 1993 (1993-09-28)**
• **BLACKMER R H ET AL: "ION-EXCHANGE MEMBRANE" SAE JOURNAL, vol. 70, no. 1, 1 janvier 1962 (1962-01-01), pages 82-86, XP002044995**
• **PATENT ABSTRACTS OF JAPAN vol. 096, no. 009, 30 septembre 1996 (1996-09-30) -& JP 08 138692 A (TOYOTA MOTOR CORP), 31 mai 1996 (1996-05-31)**
• **PATENT ABSTRACTS OF JAPAN vol. 018, no. 345 (E-1571), 29 juin 1994 (1994-06-29) -& JP 06 089730 A (FUJI ELECTRIC CO LTD), 29 mars 1994 (1994-03-29)**
• **PATENT ABSTRACTS OF JAPAN vol. 095, no. 011, 26 décembre 1995 (1995-12-26) -& JP 07 220746 A (MITSUBISHI HEAVY IND LTD), 18 août 1995 (1995-08-18)**
• **PATENT ABSTRACTS OF JAPAN vol. 018, no. 672 (E-1646), 19 décembre 1994 (1994-12-19) -& JP 06 267564 A (MITSUBISHI HEAVY IND LTD), 22 septembre 1994 (1994-09-22)**

EP 1 131 854 B1

- PATENT ABSTRACTS OF JAPAN vol. 097, no. 011, 28 novembre 1997 (1997-11-28) -& JP 09 180741 A (FUJI ELECTRIC CO LTD), 11 juillet 1997 (1997-07-11) -& DATABASE WPI Derwent Publications Ltd., London, GB; AN 97-408298 XP002112912
- PATENT ABSTRACTS OF JAPAN vol. 096, no. 006, 28 juin 1996 (1996-06-28) -& JP 08 045520 A (MAZDA MOTOR CORP), 16 février 1996 (1996-02-16) -& DATABASE WPI Derwent Publications Ltd., London, GB; AN 96-164930 XP002112913
- NAYLOR P D ET AL: "PERFORMANCE DETERMINING CHARACTERISTICS OF SOLID POLYMER FUEL CELL ELECTRODES" POWER SOURCES.RESEARCH AND DEVELOPMENT IN NON-MECHANICAL ELECTRICAL POWER SOURCES,APRIL 91,BOURNEMOUTH, vol. 13, 1 janvier 1991 (1991-01-01), pages 253-261, XP000490942
- PATENT ABSTRACTS OF JAPAN vol. 016, no. 120 (E-1182), 26 mars 1992 (1992-03-26) -& JP 03 289057 A (HITACHI LTD), 19 décembre 1991 (1991-12-19)
- PATENT ABSTRACTS OF JAPAN vol. 018, no. 617 (E-1634), 24 novembre 1994 (1994-11-24) -& JP 06 236765 A (MASAHIRO WATANABE), 23 août 1994 (1994-08-23)
- PATENT ABSTRACTS OF JAPAN vol. 096, no. 008, 30 août 1996 (1996-08-30) -& JP 08 096820 A (TOYOTA MOTOR CORP), 12 avril 1996 (1996-04-12)

## Description

La présente invention a trait à une plaque bipolaire pour pile à combustible.

L'invention concerne également un dispositif de pile à combustible, en particulier du type à électrolyte solide, comprenant au moins une desdites plaques bipolaires.

Le domaine de l'invention peut être défini comme celui des piles à combustible, en particulier des piles à combustible du type à électrolyte polymère solide.

Les piles à combustible du type à électrolyte polymère solide trouvent en particulier leur application dans les véhicules électriques qui font actuellement l'objet de nombreux programmes de développement afin d'apporter une solution à la pollution causée par les véhicules à moteur thermique.

Les piles à combustible à électrolyte polymère solide pourraient permettre, en jouant le rôle de convertisseur d'énergie électrochimique associé à un réservoir d'énergie embarquée, par exemple de l'hydrogène ou un alcool, de surmonter les problèmes notamment d'automobile, de temps de recharge et de coût, liés à l'utilisation de batteries dans les véhicules électriques.

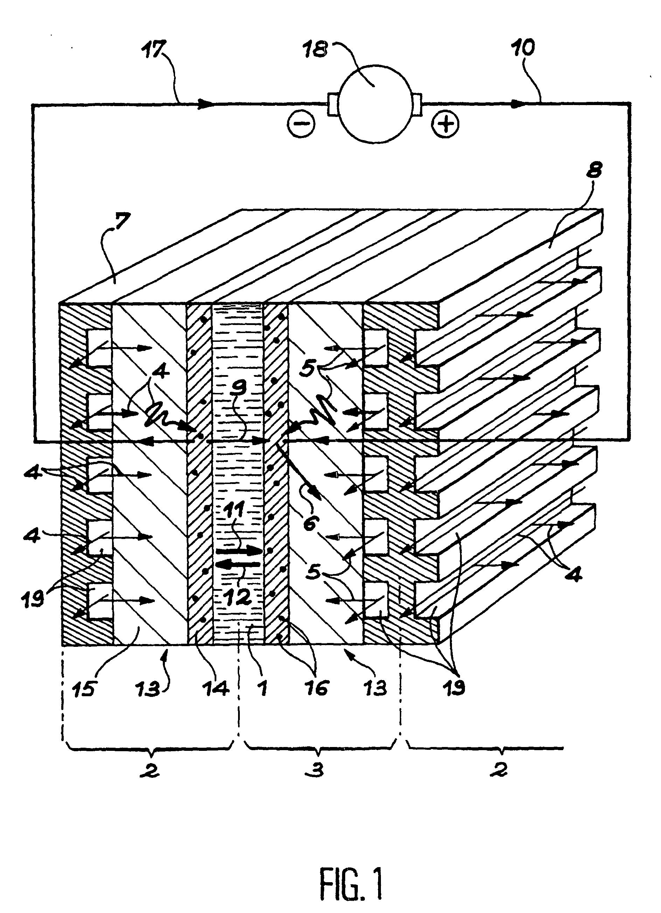

L'assemblage schématique d'une pile à combustible, permettant la production d'énergie électrique, est représenté en partie sur la figure 1 jointe.

Une membrane de type échangeuse d'ions formée d'un électrolyte solide polymère (1), sert à séparer le compartiment anodique (2), où se produit l'oxydation du combustible, tel que l'hydrogène $H_2$ (4), selon le schéma :

$$2H_2 \rightarrow 4H^+ + 4e^-,$$

du compartiment cathodique (3), où l'oxydant, tel que l'oxygène de l'air $O_2$ (5) est réduit, selon le schéma :

$$O_2 + 4H^+ + 4e^- \rightarrow 2H_2O,$$

avec production d'eau (6), tandis que l'anode et la cathode sont reliées par un circuit extérieur (10). L'eau ainsi produite circule entre les deux compartiments par électro-osmose et par diffusion (flèches 11, 12).

La membrane conductrice ionique est généralement une membrane organique de type ionomère perfluoré contenant des groupes ioniques qui, en présence d'eau, permettent la conduction des protons (9) produits à l'anode par oxydation de l'hydrogène.

L'épaisseur de cette membrane est de quelques dizaines à quelques centaines de microns et résulte d'un compromis entre la tenue mécanique et la chute ohmique. Cette membrane permet également la séparation des gaz. La résistance chimique et électrochimique de ces membranes permet, en général, un fonctionnement en pile sur des durées supérieures à 1 000 heures.

Les électrodes volumiques (13), placées de part et d'autre de la membrane, comprennent généralement une zone active (14) et une zone diffusionnelle (15). La zone active est constituée de graphite poreux recouvert de grains de métal noble (16), tel que le platine, et un mince dépôt de polymère conducteur ionique, de structure similaire à celle de la membrane, permet le transport ionique. La zone diffusionnelle (15) est constituée d'un poreux rendu hydrophobe par l'application d'un polymère hydrophobe, tel que le graphite enduit de PTFE. Le caractère hydrophobe permet l'évacuation de l'eau liquide.

Les protons produits à l'anode, par oxydation, par exemple de l'hydrogène en surface des grains de platine, sont transportés (9) au travers de la membrane jusqu'à la cathode où ils se recombinent avec les ions produits par la réduction, par exemple de l'oxygène de l'air pour donner de l'eau (6).

Les électrons, ainsi produits (17), permettent d'alimenter, par exemple, un moteur électrique (18) placé dans le circuit extérieur (10), avec comme seul sous-produit de la réaction, de l'eau.

L'ensemble membrane et électrodes est un assemblage très mince d'une épaisseur de l'ordre du millimètre et chaque électrode est alimentée par l'arrière, par exemple à l'aide d'une plaque cannelée, par les gaz.

Les densités de puissance obtenues par cette recombinaison et qui sont généralement de l'ordre de 0,5 à 2 W/cm$^2$, dans le cas où l'on met en oeuvre de l'hydrogène et de l'oxygène, nécessitent l'association de plusieurs de ces structures électrode volumique-membrane-électrode volumique pour obtenir, par exemple les 50 kW nécessaires à un véhicule électrique standard.

Autrement dit, il est nécessaire d'assembler un nombre important de ces structures, dont les surfaces élémentaires peuvent être de l'ordre de 20 x 20 cm$^2$, pour obtenir la puissance voulue, notamment dans le cas où la pile à combustible est mise en oeuvre dans un véhicule électrique.

Dans ce but, chaque ensemble formé de deux électrodes et d'une membrane, définissant une cellule élémentaire de la pile à combustible, est ainsi disposé entre deux plaques étanches (7, 8) qui, d'une part, assurent la distribution de l'hydrogène, côté anode et, d'autre part, de l'oxygène côté cathode. Ces plaques sont appelées des plaques bipolaires.

Les plaques bipolaires utilisées dans les piles à combustible doivent répondre à plusieurs fonctions ; elles doivent, entre autres, remplir les critères ou exigences suivants :

- Assurer la tenue mécanique des ensembles électrodes volumiques-membranes dans des assemblages de type filtre-presse, tout en en limitant les épaisseurs à quelques millimètres pour obtenir un volume global de pile compatible, notamment à l'application dans un véhicule électrique ;

- assurer la conduction électronique et thermique entre les ensembles électrodes volumiques-membranes successifs, en obtenant les plus grandes conductivités électroniques et thermiques possibles, de manière à limiter les chutes ohmiques préjudiciables au fonctionnement de la pile (échauffement excessif) et au rendement ;
- assurer l'étanchéité aux gaz tout en résistant à la corrosion thermique et électrochimique associée aux conditions de fonctionnement spécifiques à une pile ;
- intégrer des chemins de diffusion assurant une distribution homogène des gaz d'alimentation sur les électrodes ;
- intégrer des éléments d'élimination de l'eau en excès ;
- intégrer des éléments de refroidissement.

Pour la distribution des gaz, sont usinés, sur les plaques bipolaires, des canaux de distribution de gaz de section carrée ou rectangulaire (19), par exemple de 1 à 2 mm de côté environ. Ces canaux sont destinés à alimenter de la manière la plus uniforme possible les électrodes en gaz car ils sont organisés de manière à serpenter sur toute la surface de l'électrode. Ils permettent également de récupérer et d'évacuer l'eau produite vers l'extérieur. Habituellement, ces canaux sont constitués de tronçons horizontaux séparés par des coudes descendant à 180°.

Afin de minimiser les pertes de pression entre l'entrée et la sortie des gaz et d'éviter d'imposer un trop fort écart de pression entre les deux faces de la membrane, plusieurs canaux peuvent être disposés sur une même plaque bipolaire ou plaque distributrice, par exemple en parallèle.

Il a été constaté que les performances des piles munies de telles plaques bipolaires, comportant des canaux de distribution de gaz de section carrée ou rectangulaire, n'étaient pas encore satisfaisantes, en particulier du fait que la tension maximale atteinte relativement faible, qui est environ de 0,5 V à 0,7 V cm$^2$ en fonctionnement H$_2$/air, peut être considérée comme insuffisante.

En outre, la tension délivrée présente une forte instabilité au cours du temps, et le plus haut niveau de tension ne peut être maintenu sur une longue durée sans que ne se produisent des variations parfois importantes et totalement imprévues.

Ces problèmes semblent, de manière évidente, être liés à l'écoulement des divers fluides gazeux et liquides en circulation dans le dispositif de pile à combustible et, en particulier, dans les canaux de distribution des gaz des plaques bipolaires.

Par ailleurs, les plaques bipolaires, utilisées actuellement, sont soit en graphite imprégné de résines, soit en acier inoxydable. Il est nécessaire, dans les deux cas, d'avoir recours à un usinage long, coûteux, et compliqué pour former les rainures, canaux ou cannelures d'alimentation en gaz des plaques bipolaires.

Il a été ainsi mis en évidence que le coût de ces plaques pouvait représenter jusqu'à environ 60 % à 70 % du coût total des prototypes existants, une part importante, sinon essentielle, du coût des plaques étant associée à leur usinage.

Ainsi, si au cours des dernières années des progrès conséquents ont été réalisés et ont permis de réduire les coûts des piles à combustible, en réduisant, d'une part, les quantités de platine mises en oeuvre, et, d'autre part, dans une moindre mesure, les coûts de fabrication des membranes nécessaires, des progrès substantiels restent encore à réaliser en ce qui concerne les plaques, permettant une mise en oeuvre simplifiée, en supprimant notamment des opérations d'usinage, en particulier pour l'obtention des chemins de diffusion des gaz.

Une telle simplification de leur fabrication conduisant à une réduction des coûts des plaques se répercuterait sur celui des piles à combustible pour les amener dans un domaine de prix similaire à celui d'un moteur thermique.

Il existe donc un besoin pour des plaques bipolaires pour piles à combustible, en particulier pour piles à combustible à électrolyte solide, qui, lorsqu'elles sont mises en oeuvre dans une telle pile à combustible, permettent d'obtenir des performances améliorées, notamment en ce qui concerne la tension maximale atteinte, et qui assurent un maintien de ces performances élevées, au cours du temps, sans que ne se produisent de variations imprévues et aléatoires de celles-ci, de telles plaques bipolaires devant par ailleurs répondre, entre autres, à l'ensemble des exigences déjà citées plus haut.

Il existe, en outre, un besoin pour des plaques bipolaires, qui puissent être préparées simplement, en un nombre limité d'étapes et au moindre coût et par un procédé qui limite en particulier, les opérations d'usinage longues et coûteuses qui oblitèrent le coût de ces pièces et, par voie de conséquence, des piles à combustible les comprenant.

Le but de l'invention est donc de fournir des plaques bipolaires pour piles à combustible qui répondent, entre autres, à l'ensemble des besoins mentionnés ci-dessus, qui ne présentent pas les inconvénients, désavantages, défauts et limitations des plaques bipolaires de l'art antérieur, et qui résolvent les problèmes des plaques bipolaires de l'art antérieur.

Le but de l'invention est encore de fournir un procédé de fabrication de telles plaques bipolaires pour piles à combustible qui soit, entre autres, simple et peu coûteux et d'une durée réduite.

Le but de l'invention est enfin de fournir un dispositif de pile à combustible présentant des performances accrues - notamment en termes de tension maximale atteinte et de stabilité de ces performances au cours du temps - avec des coûts notablement abaissés, un tel dispositif de pile à combustible étant, en particulier, susceptible d'être mis en oeuvre dans un véhicule électrique.

Ce but et d'autres encore sont atteints, conformément à l'invention, par une plaque bipolaire pour pile à combustible comprenant sur au moins l'une de ses faces, au moins une cannelure, susceptible de former avec la surface d'une électrode adjacente, au moins un canal de distribution de gaz, dans laquelle ledit canal de distribution a une forme ou géométrie telle qu'elle permette d'éloigner le liquide de l'écoulement diphasique circulant dans ledit canal de ladite surface d'électrode.

Généralement, ladite surface d'électrode adjacente est une surface sensiblement verticale.

De préférence, c'est la section transversale dudit canal qui a une forme ou géométrie telle qu'elle permette d'éloigner le liquide de l'écoulement diphasique circulant dans ledit canal de la surface d'électrode.

La forme ou géométrie spécifique des canaux et, en particulier, de la section transversale des canaux de distribution de gaz, selon l'invention, éloigne le liquide des électrodes, ou encore permet de déplacer, préférentiellement, le liquide vers des zones éloignées de la surface de l'électrode, par exemple, vers une zone que l'on peut définir comme étant "le fond" de ladite cannelure ou dudit canal, et l'on évite ainsi la formation d'un film de liquide tel que l'eau contre la surface de l'électrode.

Grâce à la forme ou à la géométrie spécifique des canaux de distribution de gaz, selon l'invention, on obtient un régime d'écoulement particulier favorable aux performances de la pile. Parmi les nombreuses géométries possibles pour les canaux d'écoulement, la géométrie spécifique, selon l'invention, est la seule qui permette à son tour, parmi tous les régimes d'écoulements possibles, d'obtenir un type d'écoulement particulier, dans lequel le liquide circulant est éloigné de l'électrode.

Ce type d'écoulement est, de manière surprenante, celui qui permet, en particulier, d'obtenir de manière stable les meilleures performances de la pile à combustible, notamment de la plus haute tension, pendant la plus longue durée, sans variations aléatoires et imprévues au cours du temps.

La plaque bipolaire, selon l'invention, permet de répondre à l'ensemble des besoins mentionnés ci-dessus et de remédier aux problèmes posés par les plaques bipolaires de l'art antérieur dont les canaux de distribution de gaz ont une section carrée ou rectangulaire.

La plaque bipolaire, selon l'invention, répond à l'ensemble des exigences, citées plus haut, auxquelles doivent satisfaire les plaques bipolaires pour pile à combustible.

La plaque bipolaire, selon l'invention, permet d'obtenir une tension maximale plus élevée que dans les piles à combustible de l'art antérieur, munies de canaux de distribution à section carrée ou rectangulaire.

Ce haut niveau de tension est maintenu sur une longue durée sans aucune variation notable de la tension au cours du temps, c'est-à-dire que la tension délivrée par la pile est, en permanence, très élevée et ce, avec une grande stabilité temporelle, sans aucune variation aléatoire. La fiabilité de la pile s'en trouve accrue.

La plaque bipolaire, selon l'invention, a également pour avantage d'élargir la gamme des paramètres de fonctionnement, tels que les débits de gaz, acceptables de la pile, par rapport aux plaques munies de canaux à section carrée ou rectangulaire, c'est-à-dire que le réglage des paramètres de fonctionnement de la pile est moins délicat et autorise une plus grande marge d'erreur ou d'incertitude.

Selon l'invention, et de préférence, les deux faces de ladite plaque bipolaire comprennent au moins une cannelure.

Dans une première forme de réalisation de la plaque bipolaire, selon l'invention les angles de la section transversale dudit canal sont plus ouverts du côté dudit canal formé par ladite surface d'électrode que du côté dudit canal le plus éloigné de ladite surface.

De préférence dans cette première forme de réalisation, la section transversale dudit canal a sensiblement la forme d'un quadrilatère convexe comprenant un premier côté constitué par ladite surface d'électrode, un deuxième côté opposé audit premier côté, et deux autres côtés, les angles compris entre ledit premier côté et chacun desdits deux autres côtés étant plus ouverts que les angles compris entre ledit côté opposé et chacun desdits deux autres côtés.

Dans cette géométrie, les angles sont plus ouverts au niveau de l'électrode qu'au niveau des zones où l'on souhaite amener le liquide, tel que de l'eau. Les angles moins ouverts ou aigus, qui sont donc compris entre le côté opposé à l'électrode - définissant le "fond" du canal et de la cannelure - et chacun des deux autres côtés, correspondent aux effets capillaires les plus importants et le liquide se place préférentiellement dans ces zones.

Dans cette première forme de réalisation, ledit quadrilatère convexe est, de préférence, un trapèze dont les bases constituent ledit premier côté - surface de l'électrode - et ledit côté opposé - fond du canal et de la cannelure.

Autrement dit, lesdits premier côté et côté opposé sont alors parallèles.

De préférence encore, ledit trapèze est un trapèze isocèle, c'est-à-dire que les côtés autres que les bases sont égaux.

Dans une seconde forme de réalisation de la plaque bipolaire, selon l'invention, la section transversale dudit canal est carrée ou rectangulaire et du moins une des parois ou faces du canal, autre que celle formée par la surface d'électrode comporte au moins une rainure ou entaille. Les trois parois ou faces, autres que celle formée par la surface d'électrode peuvent comporter au moins une rainure ou entaille.

Ou bien, seule les deux parois "latérales" du canal, c'est-à-dire les parois, autres que la paroi formée par la surface d'électrode et que la paroi du canal opposée à celle-ci, comportent au moins une rainure ou entaille.

Ou bien encore, seule la paroi opposée à la paroi formée par la surface d'électrode (fond du canal) comporte au moins une rainure.

La forme des rainures ou entailles peut être quelconque, mais il s'agit généralement de rainures ou d'entailles à section en V dont l'angle d'ouverture est, de préférence, inférieur à 90°.

La dimension des rainures est généralement faible par rapport à la taille du canal, c'est-à-dire que la profondeur et/ou la largeur de la rainure ne représente, par exemple, que de 1/4 à 1/10 par rapport à la taille des parois sur lesquelles elles sont formées.

Selon un aspect particulièrement avantageux de la présente demande, la géométrie spécifique des canaux de distribution de gaz des plaques bipolaires, selon l'invention, permet de faciliter l'intégration de nouvelles fonctions dans ces plaques.

Les plaques peuvent, par exemple, comprendre des moyens d'extraction et/ou d'amenée, de redistribution de liquide permettant, par exemple, l'humidification interne des gaz. Cette fonction est facilitée par la localisation du liquide, tel que l'eau, dans des zones, selon l'invention, éloignées de la surface de l'électrode.

Lesdits moyens d'extraction et/ou d'amenée, de redistribution de liquide comprennent, par exemple, des moyens de drainage et/ou de remontée capillaire comprenant, par exemple, au moins un élément poreux prévu, par exemple, dans ou sur la cannelure, servant à la distribution de gaz dans la zone où le liquide est localisé, c'est-à-dire, une zone éloignée de la surface de l'électrode, de préférence, dans ou sur la paroi opposée à la paroi formée par la paroi d'électrode, et/ou dans ou sur au moins une des parois latérales de ladite cannelure.

Les éléments poreux peuvent, par exemple, prendre la forme d'une plaque insérée entre les canaux et servant à redistribuer l'eau au profit des zones en déficit, par exemple en entrée de pile, ou, à extraire de la pile l'eau produite.

Le poreux peut également prendre la forme, par exemple, d'inserts en forme de trapèze.

Le poreux peut être une mousse à pores ouverts en matériaux divers, tels que les matériaux métalliques ou encore polymères.

Les moyens d'extraction et/ou d'amenée de liquide peuvent aussi comprendre des perforations ou trous prévus dans au moins une des parois des cannelures ou canaux de distribution de gaz, de préférence dans les parties des parois de ces cannelures en contact avec ledit élément poreux.

Selon une forme particulièrement avantageuse de l'invention la plaque bipolaire est constituée par une plaque unique emboutie et pliée comprenant une succession de cannelures de même profondeur alternées de part et d'autre de ladite plaque unique.

Lesdites cannelures lors de l'assemblage de l'empilement des plaques bipolaires avec les électrodes (ou plutôt les assemblages EME : Electrode-Membrane-Electrode) définiront ainsi de part et d'autre de ladite plaque unique deux canaux ou zones de distribution de gaz respectivement anodique et cathodique.

L'invention concerne également un procédé de fabrication des plaques bipolaires décrites ci-dessus. Le procédé selon l'invention qui est simple, rapide et d'une grande précision comprend la succession d'étapes suivantes :

- fournir un ou des fil(s) de forme adéquate pour définir les cannelures de la plaque bipolaire ;
- fixer le ou lesdits fil(s) sur au moins l'une des faces d'une plaque plane pour définir une ou des cannelure(s) ayant la géométrie voulue.

De préférence ledit fil est obtenu par filage au travers d'une filière de forme adéquate et le ou les fil(s) est(sont) fixés à la plaque par soudure par points.

L'invention concerne enfin la pile à combustible comprenant au moins une plaque bipolaire selon l'invention.

L'invention va maintenant être décrite plus en détail en référence aux dessins joints dans lesquels :

- la figure 1 représente schématiquement une pile à combustible comprenant plusieurs cellules élémentaires avec un assemblage Electrode-Membrane-Electrode, ainsi que des plaques bipolaires.
- La figure 2 représente une forme préférée de la première forme de réalisation des canaux de distribution de gaz des plaques bipolaires selon l'invention.
- La figure 3 représente une forme de réalisation des canaux de distribution de gaz des plaques bipolaires selon l'invention conforme à la première forme de réalisation.
- Les figures 4 et 5 représentent une seconde forme de réalisation des canaux de distribution de gaz des plaques bipolaires selon l'invention, les canaux ou cannelures ayant des sections respectivement rectangulaires et carrées et étant pourvus d'entailles ou rainures.
- La figure 6 représente un fil de forme utilisé dans un procédé de préparation des plaques bipolaires selon l'invention.
- La figure 7 représente un assemblage formant cellule élémentaire comprenant un ensemble Electrode-Membrane-Electrode (EME) et deux plaques bipolaires préparées par un procédé selon l'invention à partir du fil de la figure 6.
- La figure 8 représente un assemblage comprenant deux ensembles Electrode-Membrane-Electrode et deux plaques bipolaires selon l'invention constitués par des profilés de tôle emboutis et pliés.

- La figure 9 représente un assemblage comprenant deux ensembles Electrode-Membrane-Electrode, deux plaques bipolaires, selon l'invention, constituées par des profilés de tôle emboutis et pliés et des poreux de drainage et de redistribution de l'eau liquide situés en fond de canal.
- La figure 9A représente une vue agrandie en coupe d'une cannelure de la plaque bipolaire en tôle emboutie et pliée de la figure 9 pourvue de perforations sur la paroi de fond opposée à la surface d'électrode.
- La figure 10 représente un assemblage comprenant deux ensembles Electrode-Membrane-Electrode, deux plaques bipolaires, selon l'invention, constituées par des profilés de tôle emboutis et pliés et des poreux de drainage et de redistribution de l'eau liquide situés sur les faces latérales des canaux de distribution.
- la figure 10A est une vue agrandie en coupe d'une cannelure de la plaque bipolaire en tôle emboutie et pliée de la figure 10 pourvue de perforations sur ses parois latérales.
- La figure 11 est un graphique qui représente une fonction du temps t exprimé en heures, d'une part, le débit d'oxygène $QO_2$ exprimé en $N\ell/h$ (courbe en traits pointillés), d'autre part, la tension $U_{cel}$ exprimée en V (courbe en trait plein) d'une pile de 50 $cm^2$ alimentée en hydrogène/oxygène et placée en série avec une cellule de 200 $cm^2$.
- La figure 12 est un graphique qui représente en fonction du temps t exprimé en secondes, d'une part, la tension $U_{cel}$ exprimée en V (courbe en trait plein) d'une pile de 50 $cm^2$, d'autre part, la tension exprimée en V (courbe en pointillés) d'un photomultiplicateur détectant le passage des bouchons d'eau dans les canaux de distribution de gaz de la pile.

Selon l'invention, la section transversale du ou des canal(aux) de distribution de gaz a une forme ou géométrie telle qu'elle permette d'éloigner le liquide de l'écoulement diphasique s'écoulant dans ledit canal de la surface de l'électrode.

Les inventeurs ont caractérisé les écoulements diphasiques d'une pile à combustible et ils ont pu montrer que plusieurs régimes d'écoulement étaient rencontrés lors du fonctionnement, mais que, de manière surprenante, un seul de ces régimes d'écoulement conduisait à des performances supérieures de la pile.

Ainsi, trois régimes d'écoulement principaux ont-ils pu être mis en évidence :

- un écoulement annulaire, caractérisé par un film liquide mince couvrant toutes les parois du canal, y compris la surface de l'électrode ;
- un écoulement intermittent, caractérisé par le passage par intermittence de poches de gaz et de bouchons d'eau liquide, et donc par une présence continue de liquide sur toutes les parois du canal, y compris la surface de l'électrode ;
- un écoulement stratifié ou doublement stratifié, comportant au moins un film d'eau sur les parties supérieure et inférieure du canal dans ses tronçons horizontaux.

Par exemple, en fonctionnement hydrogène/oxygène, les régimes d'écoulements intermittent et doublement stratifié existent côté anodique et côté cathodique dans les conditions normales de fonctionnement.

En fonctionnement hydrogène/air, les régimes d'écoulement doublement stratifié et intermittent existent côté anodique. A cause de la dilution de l'oxygène par l'azote, l'écoulement intermittent est impossible côté air et l'écoulement annulaire est observé dans des conditions de fonctionnement caractérisées par de très forts débits.

Il a donc ensuite été montré que dans des conditions expérimentales identiques, à l'exception du débit de gaz, et de manière surprenante, un écoulement doublement stratifié, donne des performances de pile supérieures aux deux autres régimes d'écoulements annulaire et intermittent.

De plus, un écoulement intermittent induit des instabilités temporelles de la tension.

Il ressort donc de ce qui précède que pour maintenir les performances d'une pile à combustible à distribution de gaz par canaux à leur plus haut niveau de tension, il est nécessaire de conserver le régime d'écoulement doublement stratifié aux écoulements diphasiques des canaux anodique et cathodique.

L'explication que l'on donne ici a posteriori, tient à la nature même des régimes d'écoulement. Dans un écoulement annulaire, le gaz est entouré d'un film liquide sur toute sa périphérie. De même, dans un écoulement intermittent, les poches de gaz sont également entourées d'un film d'eau liquide. L'électrode n'est pas en contact direct avec le gaz réactif et ce dernier doit diffuser à travers le film liquide, par exemple le film d'eau, avant d'atteindre l'électrode. Cette diffusion représente une étape limitante. Dans le cas d'écoulements stratifiés, le gaz dispose d'un accès direct à l'électrode.

Dans les cas réalistes, le nombre de canaux et la dimension des canaux n'ont pas d'influence prévisible sur l'apparition d'un régime intermittent. Le débit de gaz est un paramètre clé pour conserver un écoulement doublement stratifié, mais afin de diminuer l'encombrement des composants annexes de la pile, tels que reformeur, humidificateur, on tend à diminuer le débit de gaz, ce qui va à l'encontre de l'influence du débit de gaz sur le maintien d'un régime doublement stratifié. Il faut alors conserver les avantages de l'écoulement doublement stratifié pour les deux gaz, c'est-à-dire l'absence de film liquide sur l'électrode, sans agir sur le paramètre débit.

C'est précisément ce qui a été réalisé dans la présente invention, où de manière surprenante, il a été mis en évidence que la forme du canal était alors parmi les nombreux paramètres régissant les performances de la pile, le paramètre primordial.

Toute géométrie qui permet d'éloigner le liquide de l'écoulement diphasique circulant dans le canal de la surface d'électrode est conforme à l'invention, c'est-à-dire encore que toute géométrie de canal, qui permet de déplacer le liquide préférentiellement vers des zones éloignées de l'électrode pour éviter la formation d'un film contre l'électrode, est conforme à l'invention.

De telles géométries sont, par exemple, celles mettant à profit la tension de surface pour réaliser l'exigence relative à l'éloignement du liquide de la surface d'électrode. De préférence, cette géométrie est définie par une géométrie spécifique de la section transversale du canal.

Dans une première forme de réalisation de la plaque bipolaire de l'invention, les angles de la section transversale dudit canal sont plus ouverts du côté dudit canal formé par ladite surface d'électrode que du côté dudit canal le plus éloigné (par exemple le côté opposé) de ladite surface. Parmi les nombreuses géométries répondant à cette condition, la section transversale du canal de distribution a, dans ce premier mode de réalisation de préférence, sensiblement la forme d'un quadrilatère convexe comprenant un premier côté constitué par la surface d'électrode, un deuxième côté opposé audit premier côté, et deux autres côtés, les angles compris entre ledit premier côté et chacun desdits deux autres côtés étant plus ouverts que les angles compris entre ledit côté opposé et chacun desdits deux autres côtés, c'est-à-dire que les premiers angles cités sont des angles "obtus" qui vont, par exemple de plus de 90° à 135° et que les seconds angles cités sont des angles "aigus" qui vont, par exemple, de moins de 90° à 45°.

On note qu'une telle géométrie est différente des géométries à sections carrées et rectangulaires des canaux de l'art antérieur et permet précisément du fait de l'effet capillaire important des angles aigus opposés, éloignés de l'électrode, d'écarter le liquide de celle-ci.

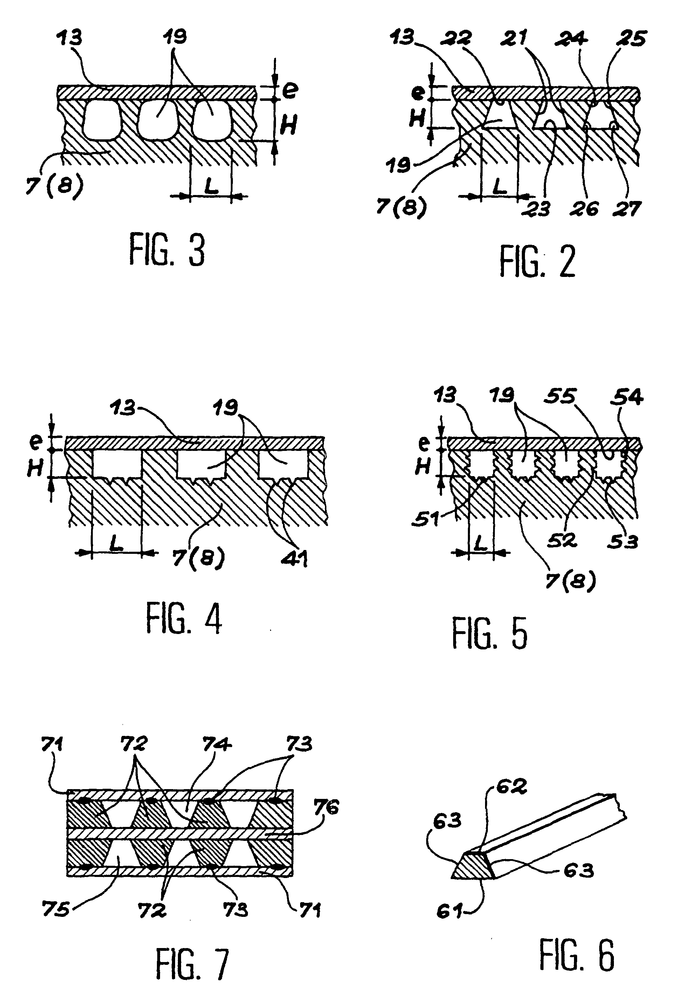

La figure 2 représente une géométrie préférée des canaux selon le premier mode de réalisation de l'invention : les canaux (19) (voir figure 1) ont une section transversale en forme de trapèze isocèle dont les côtés (21) autres que les bases (22,23) sont égaux et dont la petite base (22) est définie par la surface de l'électrode (13).

Cette géométrie est également appelée "géométrie en queue d'aronde". Il s'agit d'un cas particulier de section en forme de quadrilatère convexe avec deux côtés parallèles (22,23) et les deux autres côtés (21) égaux. Bien entendu, dans toutes ces géométries, la condition d'angles définie plus haut doit être respectée.

Les dimensions des canaux de la figure 4 sont, par exemple, une hauteur ou profondeur H de 1,5 mm et une longueur L du fond du canal (23), c'est-à-dire de la grande base (23) du trapèze de 1,5 mm, tandis que l'électrode (13) a une épaisseur e, par exemple, de 0,4 mm.

Il est bien évident que ces valeurs ne sont données qu'à titre indicatif et qu'elles peuvent varier entre de larges limites, par exemple H peut aller de 1 à 4 mm, L peut aller de 1 à 4 mm.

Sur la figure 2, les angles proches de l'électrode (24,25) ont tous deux une valeur de 105°, c'est-à-dire qu'ils sont beaucoup plus ouverts que les deux angles opposés (26,27) qui ont une valeur de 75°.

De nouveau, ces valeurs ne sont données qu'à titre indicatif et les angles peuvent prendre toutes les valeurs définissant des angles respectivement obtus et aigus.

Sur la figure 3, on a représenté une autre géométrie préférée des canaux selon la première forme de réalisation des canaux de l'invention. Dans ce cas, la section du canal (19) est également sensiblement celle d'un trapèze isocèle comme sur la figure 3, mais dont les angles auraient été arrondis. Les dimensions H, L et e sont identiques à celles mentionnées plus haut pour les canaux représentés sur la figure 2.

Sur les figures 4 et 5, on a représenté deux géométries des canaux de distribution des plaques bipolaires selon la seconde forme de réalisation de l'invention. La section du canal est rectangulaire (figure 4) ou carrée (figure 5) et des petites entailles ou rainures sont usinées sur les parois du canal.

Sur la figure 4, les canaux ont une section rectangulaire et des entailles ou rainures (41), par exemple, au nombre de deux, sont prévues uniquement sur les parois du canal opposé à l'électrode ;

Sur la figure 5, les canaux ont une section carrée et deux entailles ou rainures (51) sont prévues sur les trois parois du canal (52, 53, 54) autres que la surface d'électrode (55). Les entailles ou rainures représentées sur les figures 4 et 5 ont une forme en V, avec un angle de 60°. Ces entailles sont petites, c'est-à-dire que leur profondeur est de 0,5 mm.

Les dimensions des canaux des figures 4 et 5 sont les suivantes : pour les canaux de section carrée : côté et profondeur H, L de 1,5 mm, pour les canaux de section rectangulaire : longueur L de 2,0 mm et profondeur H de 1,0 mm.

Il est bien évident que ces dimensions ne sont donnée qu'à titre indicatif et que le côté desdits carrés peut aller de 1 à 4 mm, tandis que la largeur H et la longueur L desdits rectangles peut aller, respectivement, de 1 à 4 mm, et de 1 à 4 mm.

De même, il est bien évident que le nombre, la forme, des rainures, leur dimension ne sont donnés qu'à titre d'exemple. D'autres formes possibles sont, par exemple, des formes de trapèze ou de triangle à fond arrondi, et la profondeur desdites rainures est généralement une fraction de la largeur du canal.

Les plaques bipolaires, selon l'invention, peuvent être préparées par tout procédé connu. Cependant, un procédé préféré pour préparer les plaques bipolaires de l'invention consiste à fabriquer au moins un fil de forme adéquate pour définir les cannelures et canaux de distribution sur une plaque plane et à fixer ledit fil sur la plaque pour former les canaux de distribution.

Le fil est de préférence obtenu par filage au travers d'une filière de forme convenable, ad hoc. On peut évidemment utiliser une autre technologie que le filage pour donner au fil la forme particulière selon l'invention, par exemple on pourra préparer les fils par usinage par fraise deux tailles à partir de surfaces rectifiées.

Dans tous les cas le procédé de fabrication permet de donner au fil la forme voulue avant même la pose du fil sur la plaque.

Ainsi, sur la figure 6 on a représenté un tel fil qui convient pour la préparation de plaques bipolaires dont les cannelures qui définissent ensuite les canaux de distribution ont une section en forme de trapèze isocèle. La section dudit fil a donc également la forme d'un trapèze isocèle avec les bases 61 et 62 parallèles et des côtés (63) égaux.

Ce fil est en un matériau choisi parmi les matériaux habituellement utilisables pour les plaques bipolaires, par exemple un acier inoxydable.

Le fil ou les fils est(sont) sont ensuite fixé(s) sur au moins un côté de préférence sur les deux côtés d'une plaque plane en un matériau convenable, lui aussi choisi parmi les matériaux compatibles en usage pile à combustible.

Le fil est fixé de préférence par soudure par point sur la plaque plane. Un tel procédé de fixation simple et rapide est suffisant pour immobiliser le fil sur la plaque, et une étanchéité relative est assurée lors de la compression correspondant au montage de plusieurs cellules chacune constituée par deux plaques bipolaires séparées par un ensemble électrode membrane électrode EME afin de fabriquer la pile à combustible.

Ce procédé de préparation est simple, rapide et d'une grande précision quant à la forme et à la dimension des canaux de distribution.

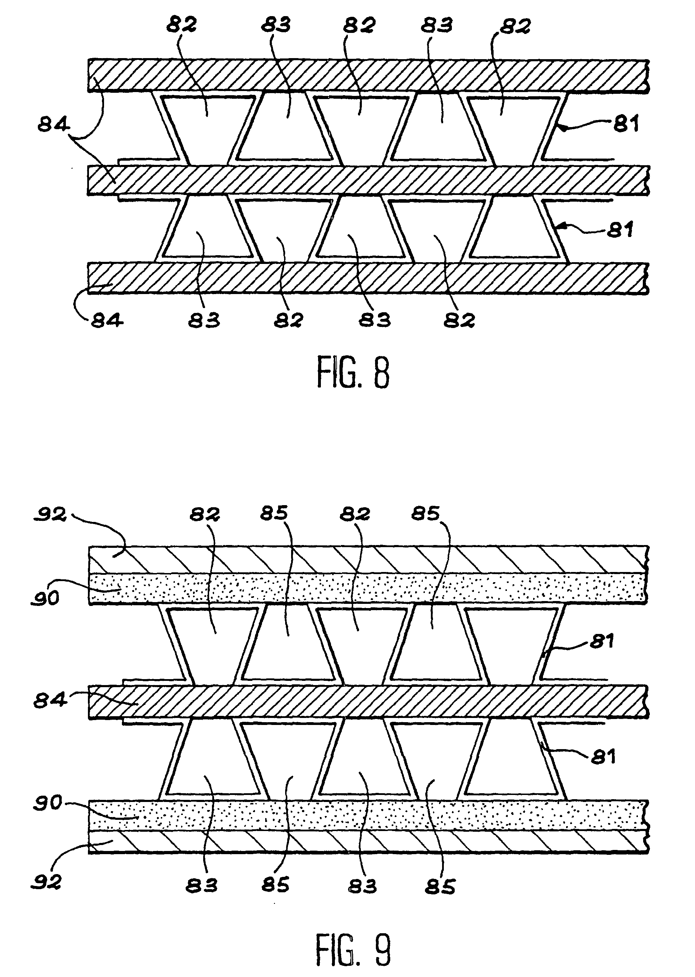

L'assemblage obtenu est représenté sur la figure 7.

Sur deux plaques planes (71) sont fixés des fils de forme (72) (voir figure 6) par des points de soudure (73), et entre les deux plaques bipolaires ainsi définies, comportant des cannelures formant des canaux de distribution (74, 75), est placé un ensemble EME (76). Les canaux de distribution assurent d'une part la distribution par exemple de l'hydrogène côté anode (75), et d'autre part de l'oxygène côté cathode (74).

Un autre procédé pour fabriquer les plaques bipolaires selon l'invention consiste à former un profilé ou plaque unique en tôle (polymères ou acier inoxydable, par exemple) puis à l'emboutir et à le plier pour former directement la plaque bipolaire. On forme ainsi simultanément des deux côtés de la plaque unique emboutie et pliée (81) et en alternance de part et d'autre de celle-ci les cannelures correspondant d'une part aux canaux de distribution de gaz cathodique (82) et d'autre part aux canaux de distribution de gaz anodique (83). L'assemblage obtenu avec trois ensembles Electrode-Membrane-Electrode (84), formant ainsi deux cellules élémentaires, est représenté sur la figure 8.

Ou bien, selon la figure 9, lesdites plaques embouties et pliées peuvent être fixées sur une plaque plane (92) assurant l'étanchéité pour former la plaque bipolaire. On définit ainsi de chaque côté d'un ensemble Electrode-Membrane-Electrode (84) alternativement des canaux (83) de distribution de gaz anodique tel que de l'hydrogène et cathodique (82) tel que de l'oxygène. Des canaux (85) peuvent être utilisés pour le contrôle thermique de la pile.

Une plaque poreuse (90) est placée au contact de la plaque (92) et supporte les cannelures (82, 83) en tôle pliée qui sont munies de trous (96) (voir figure 9A) en regard du poreux (90), c'est-à-dire sur la paroi « de fond » opposée à la surface d'électrode des cannelures (82, 83).

Les éléments poreux (90) placés au fond des canaux (82, 83) permettent d'assurer le drainage capillaire de l'eau et/ou sa répartition et sa redistribution afin par exemple d'humidifier les gaz.

La figure 9A représente une vue agrandie en coupe d'une cannelure (82, 83) de la plaque bipolaire (81) en tôle emboutie et pliée de la figure 9, le fond dudit canal ou de ladite cannelure (82, 83) est pourvu de trous ou de perforations (96).

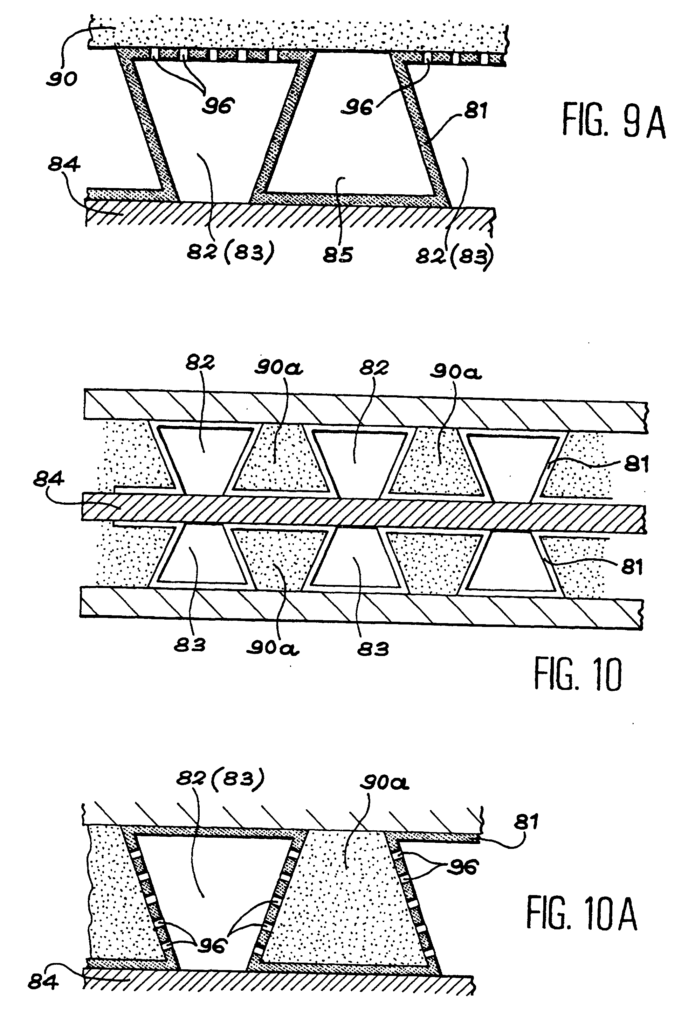

La figure 10 représente un assemblage sensiblement analogue à celui de la figure 9 comprenant deux ensembles Electrode-Membrane-Electrode, deux plaques bipolaires (81), selon l'invention, constituées par des profilés de tôle emboutis et pliés et des poreux de drainage et de redistribution de l'eau liquide situés sur les faces latérales des canaux de distribution (82, 83).

C'est-à-dire que dans l'assemblage de la figure 10, ce sont les canaux (85), définis plus haut sur la figure 9, qui sont remplis par les éléments poreux (90a), de ce fait, ce sont les parois latérales des cannelures (82, 83) qui sont perforées et pourvues de trous (96) et non, comme sur la figure 9, le fond desdites cannelures.

Autrement dit sur la figure 10, le poreux (90a) est placé dans les canaux (85) qui ne sont plus utilisés pour le contrôle thermique comme sur la figure 9, et les cannelures sont munies de trous (96) latéraux en regard du poreux.

La figure 10A représente une vue agrandie en coupe d'une cannelure (82, 83) de la plaque bipolaire en tôle emboutie et pliée (81) de la figure 10, les parois latérales dudit canal sont pourvues de trous ou perforations (96).

La présente invention a également pour objet un dispositif de pile à combustible comprenant au moins une plaque bipolaire selon l'invention.

La pile à combustible peut par exemple correspondre au schéma déjà donné sur la figure 1, c'est-à-dire que la membrane (1) est placée entre deux électrodes (13) par exemple en tissu de carbone platiné (ou traité par un autre métal noble), de préférence imprégnées d'un composé tel que le Nafion®, ou autre , dans le but d'avoir une électrode volumique.

Cet ensemble est ensuite disposé par exemple entre deux plaques bipolaires (7,8) selon l'invention qui, d'une part, assurent la distribution du gaz dit gaz anodique (4), de l'hydrogène, coté anode, et d'autre part, du gaz dit gaz cathodique tel que l'oxygène (5) côté cathode.

Outre l'oxygène le gaz cathodique peut être de l'air ou un mélange gazeux comprenant de l'oxygène.

La pile peut comprendre également des moyens (non représentés) pour réguler la température tels que des plaques de cuivre thermostatées par des crayons chauffants en monocellule ou des échangeurs de chaleur en module, et des moyens pour réguler le fonctionnement de la pile et connectés sur le circuit extérieur (10) : ces moyens sont constitués par exemple par des régulateurs de débits, de température, de pression et une charge électronique pour réguler le courant.

La pile selon l'invention ne se différencie pas fondamentalement de la pile de l'art antérieur selon la figure 1 si ce n'est par la forme des canaux de distribution de gaz (19) qui assurent des performances supérieures à la pile et la possibilité d'insérer des zones poreuses pour récupérer l'eau là ou elle est localisée grâce à la forme des canaux de la présente invention. On a par ailleurs décrit sur les figures des formes particulières que peuvent prendre les plaques fabriquées selon l'invention ainsi que les assemblages et empilements de cellules de pile à combustible les comprenant.

Les piles à combustible selon l'invention trouvent un intérêt particulier dans une utilisation pour stocker de l'énergie pour alimenter les moteurs électriques dans les véhicules électriques, ou dans le cadre des modules de production d'énergie pour fournir une énergie de secours ou pour alimenter en énergie des zones d'accès difficiles.

L'invention va maintenant être décrite en référence aux exemples suivants donnés à titre illustratif et non limitatif :

### EXEMPLE 1

Dans cet exemple on a caractérisé les écoulements diphasiques d'une pile à combustible du côté anodique et du côté cathodique en fonctionnement hydrogène/air et hydrogène/oxygène sur une cellule de 250 cm$^2$, comportant quatre canaux côté cathodique et deux canaux côté anodique, de section carrée identique 1,5 x 1,5 mm$^2$.

Les écoulements ont été observés au travers d'un hublot de visualisation affleurant les canaux de distribution et trois régimes d'écoulement principaux ont ainsi pu être mis en évidence et visualisés : il s'agit des trois régimes d'écoulement définis plus haut dans la description, à savoir : écoulement annulaire, écoulement intermittent et écoulement stratifié ou doublement stratifié.

Il est à noter que dans la caractérisation réalisée dans cet exemple pour l'écoulement doublement stratifié, la présence de gouttelettes d'eau contre la paroi du hublot de visualisation indique qu'on ne se trouve pas en présence d'un écoulement annulaire car les gouttelettes d'eau ne peuvent pas tenir sur un film d'eau mouillant la paroi. La formation d'un film supérieur dans l'écoulement doublement stratifié s'explique par le passage dans les coudes à 180°.

### EXEMPLE 2

Dans cet exemple on a étudié l'influence du régime d'écoulement tel que défini dans l'exemple 1 sur les performances d'une pile à combustible.

Les conditions expérimentales sont les mêmes au cours de toute la durée de l'expérience sauf en ce qui concerne le débit de gaz (O$_2$) qui permet de déterminer le régime d'écoulement.

Cette expérience a été réalisée en hydrogène/oxygène à différents débits de gaz sur une cellule de 50 cm$^2$ placée en série avec une cellule de 200 cm$^2$, à 4 bars et 80°C. Les valeurs des densités de courant imposées sont respectivement 1,1 A/cm$^2$ pour la cellule 200 cm$^2$ et 2,0 A/cm$^2$ pour la cellule 50 cm$^2$.

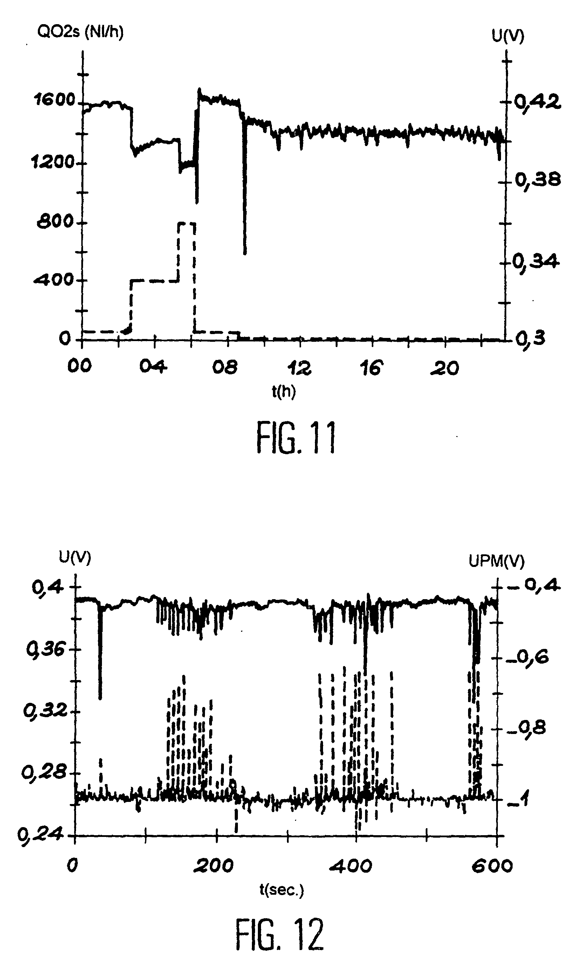

Afin de maintenir un écoulement doublement stratifié côté anodique, le débit d'hydrogène en sortie est maintenu à 100 N$\ell$/h. Les résultats de cette expérience ont été portés sur la figure 11. qui est un graphique représentant une fonction du temps t exprimé en heures d'une part ce débit d'oxygène QO$_2$ exprimé en N$\ell$/(h) (courbe du bas en traits pointillés), d'autre part, la tension U exprimé en V de la pile de 50 cm$^2$ (courbe du haut en trait plein). Par ailleurs, on a également visualisé et observé les écoulements au travers d'un hublot de la même manière que dans l'exemple 1.

On constate donc qu'avec un débit d'oxygène en sortie de 50 N$\ell$//h, l'écoulement côté cathodique est doublement stratifié et la tension de la pile est de 0,42 V. Le passage à un débit de 400 N$\ell$//h, puis 800 N$\ell$//h, induit une baisse de performances sur la seconde cellule dû au changement de régime d'écoulement ; le régime devient annulaire, caractérisé par l'apparition de vaguelettes d'eau facilement discernables à la surface du hublot. Le retour à un débit nominal de 50 N$\ell$/h permet de retrouver le niveau initial de performances.

Ensuite, le débit d'oxygène a été diminué jusqu'à 10 N$\ell$/h pour atteindre le régime d'écoulement intermittent. La visualisation confirme la nature de ce régime d'écoulement. La tension de pile est plus faible que dans le cas d'un régime stratifié, autour de 0,40 V, et présente les instabilités typiques d'un écoulement intermittent.

La figure 11 montre clairement que dans des conditions expérimentales identiques, à l'exception du débit de gaz, un écoulement doublement stratifié donne des performances de pile supérieures aux deux autres types d'écoulement principaux.

### EXEMPLE 3

Dans cet exemple on a étudié l'évolution de la tension d'une pile à combustible sur une longue durée en mettant en évidence les instabilités temporelles dues à un régime d'écoulement intermittent.

On a utilisé comme dans l'exemple 2 une cellule de 50 cm$^2$ alimentée en hydrogène/oxygène, mais sans qu'elle soit en série avec une cellule de 200 cm$^2$.

La pression est de 4 bar, la température de la cellule de 80°C, la température de l'humidification de 90°C et la température d'entrée des gaz de 20°C. Les débits d'hydrogène et d'oxygène ont été maintenus constants durant toute la durée de l'expérience et étaient respectivement de 10 N$\ell$//h et de 40 N$\ell$//h. L'intensité de courant imposée était de 100 A, soit 2A/cm$^2$.

Sur la figure 12 on présente un graphique qui représente en fonction du temps exprimé en secondes d'une part la tension de la cellule en V (courbe du haut en traits pleins) et d'autre part la tension en V d'un photomultiplicateur (courbe du bas en traits pointillés).

L'association du photomultiplicateur à un laser placé dans un des canaux de distribution de gaz du côté cathode de la cellule permet de déterminer le contenu du canal : eau ou gaz. En effet, la différence de réflexion d'un faisceau laser entre un canal plein d'eau et un canal plein de gaz a été utilisée pour détecter le passage des bouchons d'eau liquide lors d'un écoulement intermittent. L'intensité du faisceau laser réfléchi est renvoyée vers le photomultiplicateur.

Sur la courbe de la figure 12 donnant la tension du photomultiplicateur on constate que chaque pic enregistré au niveau du photomultiplicateur, qui correspond au passage d'un bouchon d'eau liquide est parfaitement corrélé à une baisse de performance très nette au niveau de la tension de la pile.

Cet exemple confirme que pour obtenir les meilleures performances et les maintenir sur une longue durée sans variations aléatoires, seul convient l'écoulement spécifique selon l'invention et par voie de conséquence la géométrie spécifique selon l'invention.

### Revendications

1. Plaque bipolaire pour pile à combustible comprenant sur au moins l'une de ses faces au moins une cannelure susceptible de former avec la surface d'une électrode adjacente au moins un canal de distribution de gaz, dans laquelle la section transversale dudit canal de distribution a sensiblement la forme d'un quadrilatère convexe comprenant un premier côté constitué par ladite surface d'électrode, un deuxième côté opposé audit premier côté, et deux autres côtés, les angles compris entre ledit premier côté et chacun desdits deux autres côtés étant plus ouverts que les angles compris entre ledit côté opposé et chacun desdits deux autres côtés.

2. Plaque bipolaire pour pile à combustible comprenant sur au moins l'une de ses faces au moins une cannelure susceptible de former avec la surface d'une électrode adjacente au moins un canal de distribution de gaz, dans laquelle la section transversale dudit canal est carrée ou rectangulaire, et au moins une des parois ou faces du canal autre que celle formée par la surface d'électrode comporte au moins une rainure ou entaille.

3. Plaque bipolaire selon la revendication 1 ou la revendication 2, dans laquelle les deux faces de la plaque bipolaire comprennent au moins une cannelure.

4. Plaque bipolaire selon la revendication 1, dans laquelle ledit quadrilatère convexe est un trapèze dont les bases constituent ledit premier côté et ledit côté opposé.

5. Plaque bipolaire selon la revendication 4, dans laquelle ledit trapèze est un trapèze isocèle.

6. Plaque bipolaire selon la revendication 2, dans laquelle les trois parois ou faces du canal, autres que celle formée par la surface d'électrode, comportent au moins une rainure ou entaille.

7. Plaque bipolaire selon la revendication 2, dans laquelle seule la paroi du canal opposée à la paroi formée par la surface d'électrode comporte au moins une rainure ou entaille.

8. Plaque bipolaire selon la revendication 2, dans laquelle seules les parois du canal, autres que celle formée par la surface d'électrode et que la paroi du canal opposée à celle-ci, comportent au moins une rainure ou entaille.

9. Plaque bipolaire selon l'une quelconque des revendications 2 et 6 à 8, dans laquelle la ou lesdites entaille(s) ou rainure(s) ont une section en v.

10. Plaque bipolaire selon la revendication 9, dans laquelle ladite section en V a un angle d'ouverture inférieur à 90°.

11. Plaque bipolaire selon l'une quelconque des revendications 1 à 10 dans laquelle lesdites plaques comprennent des moyens d'extraction et/ou d'amenée de liquide.

**12.** Plaque bipolaire selon la revendication 11 dans laquelle lesdits moyens d'extraction et/ou d'amenée de liquide comprennent au moins un élément poreux.

**13.** Plaque bipolaire selon la revendication 12 dans laquelle ledit élément poreux est prévu dans la cannelure ou canal de distribution de gaz dans la zone éloignée de la surface d'électrode où le liquide est localisé.

**14.** Plaque bipolaire selon l'une quelconque des revendications 11 à 13, dans laquelle lesdits moyens d'extraction et/ou d'amenée de liquide comprennent des perforations ou trous prévus dans au moins une des parois dudit canal différente de la paroi formée par la surface d'électrode.

**15.** Plaque bipolaire selon la revendication 12 et la revendication 14, dans laquelle lesdites perforations sont prévues dans les parties des parois de la cannelure en contact avec ledit élément poreux.

**16.** Plaque bipolaire selon l'une quelconque des revendications 1 à 15 constituée par une plaque unique emboutie et pliée comprenant une succession de cannelures de même profondeur alternées de part et d'autre de ladite plaque unique.

**17.** Procédé de préparation de la plaque bipolaire selon l'une quelconque des revendications 1 à 15 comprenant la succession d'étapes suivantes :

- fournir un ou des fil(s) ayant la forme adéquate pour définir les cannelures de la plaque bipolaire ;
- fixer le ou lesdits fil(s) sur au moins l'une des faces d'une plaque plane pour définir une ou des cannelure(s) ayant la géométrie voulue.

**18.** Procédé selon la revendication 17 dans lequel le ou lesdits fil(s) est(sont) fixés par soudure par point.

**19.** Pile à combustible comprenant au moins une plaque bipolaire selon l'une quelconque des revendications 1 à 16.

**Claims**

**1.** Bipolar plate for a fuel cell comprising on at least one of its faces at least one flute able to form with the surface of an adjacent electrode at least one gas distribution channel, wherein the cross-section of said distribution channel is essentially shaped like a convex quadrilateral comprising a first side constituted by said electrode surface, a second side, opposite to the first side, and two other sides, the angles between said first side and each of said two other sides being open than the angles between said opposite side and each of said two other sides.

**2.** Bipolar plate for a fuel cell comprising on at least one of its faces at least one flute able to form with the surface of an adjacent electrode at least one gas distribution channel, wherein the cross-section of said channel is square or rectangular, and at least one of the walls or faces of the channel, other than that formed by the electrode surface, has at least one groove or notch.

**3.** Bipolar plate according to claim 1 or 2, wherein the two faces of the bipolar plate comprise at least one flute.

**4.** Bipolar plate according to claim 1, wherein said convex quadrilateral is a trapezium whose bases constitute said first side and said opposite side.

**5.** Bipolar plate according to claim 4, wherein said trapezium is an isosceles trapezium.

**6.** Bipolar plate according to claim 2, wherein the three walls or faces of the channel, other than that formed by the electrode surface, incorporate at least one groove or notch.

**7.** Bipolar plate according to claim 2, wherein only the wall of the channel opposite to the wall formed by the electrode surface has at least one groove or notch.

**8.** Bipolar plate according to claim 2, wherein only the walls of the channel, other than that formed by the electrode surface and the wall of the channel opposite thereto, have at least one groove or notch.

**9.** Bipolar plate according to any one of the claims 2 and 6 to 8, wherein said notches or grooves have a V-shaped cross-section.

**10.** Bipolar plate according to claim 9, wherein said V-shaped cross-section has an aperture angle below 90°.

**11.** Bipolar plate according to any one of the claims 1 to 10, wherein said plates comprise liquid extraction and/or supply means.

**12.** Bipolar plate according to claim 11, wherein said liquid extraction and/or supply means comprise at least one porous element.

**13.** Bipolar plate according to claim 12, wherein said porous element is provided in the gas distribution channel or flute in the area remote from the electrode surface where the liquid is located.

**14.** Bipolar plate according to any one of the claims 11 to 13, wherein said liquid extraction and/or supply means comprise perforations or holes made in at least one of the walls of said channel different from the wall formed by the electrode surface.

**15.** Bipolar plate according to claims 12 and 14, wherein said perforations are provided in the parts of the flute walls in contact with said porous element.

**16.** Bipolar plate according to any one of the claims 1 to 15 constituted by a single stamped and bent plate comprising a succession of flutes of the same depth and alternating on either side of said single plate.

**17.** Method for the preparation of the bipolar plate according to any one of the claims 1 to 15 comprising the following succession of steps:

- supplying one or more wires having an adequate shape for defining the bipolar plate flutes,
- fixing the wire or wires to at least one of the faces of a planar plate for defining one or more flutes having the desired geometry.

**18.** Method according to claim 17, wherein said wire or wires are fixed by spot welding.

**19.** Fuel cell comprising at least one bipolar plate according to any one of the claims 1 to 16.

**Patentansprüche**

**1.** Bipolare Platte für Brennstoffzelle, auf wenigstens einer ihrer Seiten mindestens eine Hohlkehle umfassend, die mit der Oberfläche einer benachbarten Elektrode wenigstens einen Gasverteilungskanal bildet, bei der der Querschnitt des genannten Verteilungskanals im Wesentlichen die Form eines konvexen Trapezoids aufweist, mit einer ersten, durch die genannte Elektrodenoberfläche gebildeten Seite, einer zweiten, der genannten ersten Seite gegenüberstehenden Seite, und zwei weiteren Seiten, wobei die zwischen der genannten ersten Seite und jeder der genannten beiden weiteren Seiten enthaltenen Winkel offener bzw. größer sind als die Winkel zwischen der genannten entgegengesetzten Seite und jeder der genannten beiden weiteren Seiten.

**2.** Bipolare Platte für Brennstoffzelle, auf wenigstens einer ihrer Seiten mindestens eine Hohlkehle umfassend, die mit der Oberfläche einer benachbarten Elektrode wenigstens einen Gasverteilungskanal bildet, bei der der Querschnitt des genannten Verteilungskanals quadratisch oder rechteckig ist und wenigstens eine der Wände oder Seiten des Kanals, ausgenommen die durch die Elektrodenoberfläche gebildete Wand oder Seite, mindestens eine Rille oder Kerbe umfasst.

**3.** Bipolare Platte nach Anspruch 1 oder Anspruch 2, bei der die beiden Seiten der bipolaren Platte wenigstens eine Hohlkehle umfassen.

**4.** Bipolare Platte nach Anspruch 1, bei der das genannte konvexe Trapezoid ein Trapez ist, dessen Grundlinien die genannte erste Seite und die genannte gegenüberstehende Seite bilden.

**5.** Bipolare Platte nach Anspruch 4, bei der das genannte Trapez ein gleichschenkliges Trapez ist.

**6.** Bipolare Platte nach Anspruch 2, bei der alle Seiten oder Wände des Kanals mit Ausnahme der die Elektrodenoberfläche bildenden Seite wenigstens eine Rille oder Kerbe umfassen.

**7.** Bipolare Platte nach Anspruch 2, bei der nur die Wand des Kanals, die der durch die Elektrodenoberfläche gebildeten Wand gegenübersteht, wenigstens eine Rille oder Kerbe umfasst.

**8.** Bipolare Platte nach Anspruch 2, bei der nur die Wände des Kanals, die nicht durch die Elektrodenoberfläche und die ihr gegenüberstehende Wand gebildeten werden, wenigstens eine Rille oder Kerbe umfassen.

**9.** Bipolare Platte nach einem der Ansprüche 2 und 6 bis 8, bei der die Kerbe(n) oder Rille(n) einen V-förmigen Querschnitt haben.

**10.** Bipolare Platte nach Anspruch 9, bei der der genannte V-förmige Querschnitt einen Öffnungswinkel unter 90° hat.

**11.** Bipolare Platte nach einem der Ansprüche 1 bis 10, bei dem die genannten Platten Flüssigkeitsentnahme- und/oder -zuführungseinrichtungen umfassen.

**12.** Bipolare Platte nach Anspruch 11, bei der die genannten Flüssigkeitsentnahme- und/oder -zuführungseinrichtungen wenigstens ein poröses Element umfassen.

**13.** Bipolare Platte nach Anspruch 12, bei der das genannte poröse Element in dem genannten Gasverteilungskanal in der von der Elektrodenoberfläche entfernten Zone vorgesehen ist, wo die Flüssigkeit lokalisiert ist.

**14.** Bipolare Platte nach einem der Ansprüche 11 bis 13, bei der die genannten Flüssigkeitsentnahme- und/oder -zuführungseinrichtungen Perforierungen oder Löcher umfassen, vorgesehen in wenigstens einer der Wände des genannten Kanals mit Ausnahme der durch die Elektrodenoberfläche gebildeten Wand.

**15.** Bipolare Platte nach Anspruch 12 und Anspruch 14, bei der die genannten Perforierungen in den Teilen der Wände der Hohlkehle vorgesehen sind, die Kontakt haben mit dem genannten porösen Element.

**16.** Bipolare Platte nach einem der Ansprüche 1 bis 15, gebildet durch eine einzige gezogene und gebogene Platte mit einer Folge von Hohlkehlen derselben Tiefe, abwechselnd auf beiden Seiten der genannten einzigen Platte.

**17.** Herstellungsverfahren der bipolaren Platte nach einem der Ansprüche 1 bis 15, folgende Schritte umfassend:

- Beschaffung von einem Draht oder von Drähten mit der entsprechenden Form, um die Hohlkehle(n) der bipolaren Platte zu definieren;
- Befestigung des Drahts oder der Drähte an wenigstens einer der Seiten einer ebenen Platte, um eine Hohlkehle oder Hohlkehlen mit der gewünschten Geometrie zu definieren.

**18.** Verfahren nach Anspruch 17 mit Befestigung des Drahts oder der Drähte durch Punktschweißen.

**19.** Brennstoffzelle mit wenigstens einer bipolaren Platte nach einem der Ansprüche 1 bis 16.

FIG. 1

FIG. 3

FIG. 2

FIG. 4

FIG. 5

FIG. 7

FIG. 6

FIG. 8

FIG. 9

FIG. 9 A

FIG. 10

FIG. 10 A

FIG. 11

FIG. 12